# EUROPÄISCHE PATENTANMELDUNG

(11) **EP 2 080 580 A1**
(43) Veröffentlichungstag der Anmeldung: **22.07.2009**
(21) Anmeldenummer: 08021882.9
(22) Anmeldetag: 17.12.2008
(51) Int. Cl.: B23K 26/06, B29C 65/16

(54) **Laseranordnung mit elektronischem Maskierungssystem**

(30) Priorität: 17.01.2008 DE 202008000723 U
(71) Anmelder: Leister Process Technologies, 6056 Kägiswil (CH)
(72) Erfinder: Gubler, Ulrich, 6006 Luzern (CH); Zurbuchen, Reto, 6003 Luzern (CH)
(74) Vertreter: Klocke, Peter

(57) **Zusammenfassung**

Die Erfindung betrifft eine Laseranordnung zum Bearbeiten oder Verbinden von Werkstücken mittels elektromagnetischer Strahlung mit einer Laserquelle, die einen Laserstrahl abgibt und mit einem elektronischen Maskierungssystem für die Werkstücke, das der Laserquelle nachgeschaltet ist. Das Maskierungssystem bildet den passierenden Laserstrahl in einem frei bestimmbaren Muster auf den Werkstücken ab. Als Maskierungssystem wird ein Phasenmodulationsarray mit einer üblichen Pixelgröße > 4 µm verwendet und eine Laserquelle mit einer hohen Strahlqualität des Laserstrahls, die zusammen die Abbildung von Mustern mit einer Linienbreite von < 2 mm scharf auf den Werkstücken ermöglichen.

## Beschreibung

Die Erfindung betrifft eine Laseranordnung zum Bearbeiten oder Verbinden von Werkstücken mittels elektromagnetischer Strahlung, mit einer Laserquelle, die einen Laserstrahl abgibt, und einem elektronischen Maskierungssystem für die Werkstücke, das der Laserquelle nachgeschaltet ist, wobei das Maskierungssystem den passierenden Laserstrahl in einem frei bestimmbaren Muster auf den Werkstücken abbildet.

Bei der Bearbeitung oder dem Verbinden von Werkstücken mit elektromagnetischer Strahlung, insbesondere mit einem Laserstrahl, spielen die Größe und die Form des auf die Werkstücke fokussierten Strahlprofils eine wichtige Rolle. Bei der Laserbearbeitung kommt es zusätzlich auf die richtig eingestellte Leistungsdichteverteilung innerhalb des erzeugten Brennflecks an. Beim Laserstrahlschweißen, beispielsweise beim Durchstrahlschweißen von Werkstücken aus Kunststoffmaterialien, müssen oft Wärmeverteilungsmuster oder Schweißnähte mit vielfältigen Formen hergestellt werden.

Laserquellen weisen in der Regel ein rundes Strahlprofil auf, das durch geeignete Maßnahmen auf die gewünschte Größe und die benötigte Form transformiert werden muss. Dies kann einerseits durch fest auf die spezielle Aufgabe abgestimmte Optiken oder Masken geschehen, deren Bereitstellung oft langwierig ist und die meist nicht oder nicht leicht modifizierbar sind. Andererseits ist es bekannt, für mehr Flexibilität und damit höherer Nützlichkeit, den Laserstrahl mittels einem elektronischen ortsauflösenden Strahlmodulator, der die Amplitude und/oder die Polarisation und/oder die Phase des Laserlichts verändern kann, zu transformieren. Lasersysteme mit einem solchen elektronischen Strahlmodulator sind beispielsweise in den Offenlegungsschriften DE 100 07 391 A1 und DE 10 2004 017 129 A1 offenbart.

Die DE 100 07 391 A1 behandelt eine Vorrichtung und ein Verfahren für die Materialbearbeitung mit elektromagnetischer Strahlung. Durch den Einsatz des elektronischen ortsauflösenden Strahlmodulators wird bei der Vorrichtung eine vorgebbare Leistungsdichteverteilung innerhalb eines Brennfleckes auf dem Werkstück erzeugt. Die ortsauflösende Modulation der Strahlung ermöglicht sowohl eine sequentielle wie auch eine simultane Bearbeitung der Werkstücke, ebenso eine quasisimultane Bearbeitungsweise.

Die DE 10 2004 017 129 A1 beschreibt eine Laserabbildungsvorrichtung mit einer laserstrahlausgebenden Laserquelle und mit einer elektronischen Anzeigevorrichtung. Die Anzeigevorrichtung ist zur Laserquelle an der Auslaufseite nachgeschaltet angeordnet. Sie dient dazu, einzelne Abschnitte des Laserstrahls zu polarisieren, um modifizierte und unmodifizierte Abschnitte zu definieren. Ein Polarisationsfilter ist der Anzeigevorrichtung nachgeschaltet, um den Durchlass der modifizierten oder der nicht modifizierten Abschnitte des Laserstrahls wahlweise zu verhindern, damit ein Abbildungsstrahl mit einem vorbestimmten Profilmuster erzeugt wird.

Bei dem vorgenannten Stand der Technik kommen als Strahlmodulator bzw. Anzeigeeinheit vorzugsweise Anordnungen von Flüssigkristallen zum Einsatz. Die Flüssigkristalle sind in einzeln ansteuerbaren Flüssigkristallzellen eingeschlossen, die idealerweise in einem regelmäßigen Schema flächig nebeneinander angeordnet sind. Die Zellen bilden damit ein Array individueller Einzelmodulatoren. Die Modulation eines auf die Flüssigkristallzellen auftreffenden Laserstrahlbereiches geschieht dabei innerhalb der Zelle durch gezielte Beeinflussung unter Ausnutzung von elektro-optischen Effekten.

Von Flüssigkristallzellen gebildete Modulationsarrays können dazu verwendet werden, die Phase des auftreffenden Laserlichts und/oder deren Amplitude zu modulieren. Die Phasenmodulation nutzt die Energie des Laserstrahls besser gegenüber der Amplitudenmodulation, da keine Strahlungsanteile des ursprünglichen unmodulierten Laserstrahls ausgeblendet werden. Durch die räumliche Modulation der Phase des Laserlichtes wirkt das Phasenmodulationsarray als diffraktives optisches Element (DOE).

Die derzeit verfügbaren Phasenmodulationsarrays haben relativ große Pixel zwischen 5 und 10 Mikrometern. Übliche Laserquellen erzeugen eine Laserstrahlung mit einer typischen Wellenlänge von einigen hundert Nanometern. Gemäß dem Beugungsgesetz ergeben sich damit kleine maximale Ablenkwinkel von etwa 5 bis 10 Grad für die Beugung des Laserlichtes. Der Beugungswinkel hat einen großen Einfluss auf die Schärfe eines auf den Werkstücken von dem phasenmodulierten Laserstrahl erzeugten Strahlmusters. Es hat sich herausgestellt, dass dabei mit von Hochleistungsdiodenlasern bzw. von Nd-YAG-Festkörperlasern ausgekoppelten hochenergetischem Laserlicht, bei einem üblichen Bearbeitungsabstand zwischen dem Bearbeitungskopf der Laseranordnung und den Werkstücken, nur Linien mit einer Breite von mehreren Millimetern scharf auf den Werkstücken abbildbar sind. Oft ist es jedoch wünschenswert oder notwendig, schmälere Muster mit hoher Energiedichte und scharfen Kanten auf den Werkstücken zu erzeugen.

Der Erfindung liegt daher die Aufgabe zugrunde, ausgehend von dem genannten Stand der Technik, eine Möglichkeit vorzuschlagen, mit der insbesondere Linien kleinerer Breite scharf auf den Werkstücken abbildbar sind.

Diese Aufgabe wird erfindungsgemäß durch eine Laseranordnung mit den Merkmalen des Anspruchs 1 gelöst. Weitere vorteilhafte Ausgestaltungen sind den Unteransprüchen zu entnehmen.

Grundgedanke der Erfindung ist es, den Laserstrahl ohne zusätzliche optische Hilfsmittel nach dem Phasenmodulationsarray schärfer auf die Werkstücke zu fokussieren. Es hat sich gezeigt, dass die Schärfe eines Strahlmusters auf den Werkstücken nicht nur durch die Beugung des Laserstrahls, die von der Pixelgröße des Phasenmodulatorarrays und der Wellenlänge des verwendeten Laserlichts abhängig ist, bestimmt wird, sondern auch durch den Abstrahlwinkel der Laserquelle für den Laserstrahl. Die Divergenz des Laserstrahls, d.h. seine Aufweitung nach dem Strahlaustritt aus der Laserquelle mit zunehmender Entfernung, ist ein Maß für die Güte eines Lasers und dessen Strahlqualität. Eine geringere Divergenz bei kleinem Strahldurchmesser steht für eine gute Strahlqualität und führt zu einer schärferen Abbildung.

Die Fokussierbarkeit von Laserstrahlung wird nach der ISO - Norm 11146 durch die Beugungsmaßzahl M² beschrieben. Diese gibt den Divergenzwinkel im Verhältnis zur Divergenz eines idealen Gaußstrahls mit gleichen Durchmesser der Strahltaille an.

Die erfindungsgemäße Laseranordnung weist demnach ein Phasenmodulationsarray mit einer üblichen Pixelgröße von größer vier Mikrometern, vorzugsweise von vier bis zehn Mikrometern, und eine Laserquelle mit einer hohen Strahlqualität des Laserstrahls auf. Die vorgeschlagene Kombination einer Laserquelle mit hoher Strahlqualität mit einem Phasenmodulationsarray mit nach unten begrenzter Pixelgröße ermöglicht es, Linien mit einer Linienbreite kleiner zwei Millimetern mittels Laserlicht kurzer Wellenlänge scharf auf den Werkstücken abzubilden. Natürlich können mit der neuen Laseranordnung auch Muster mit größerer Linienbreite scharf abgebildet werden. Dabei kann das Phasenmodulationsarray in bekannter Weise transmissiv oder reflektiv betrieben werden.

Vorzugsweise wird dazu eine Laserquelle eingesetzt, aus der Laserstrahlung mit einer Strahlqualität K > ,25 auskoppelbar ist und der somit eine Beugungsmesszahl M² < 2 zugeordnet ist.

Diese besonders vorteilhaften Eigenschaften hat die von einem Faserlaser erzeugte Laserstrahlung. Solche Faserlaser verbinden in hervorragender Weise die Vorteile von Dioden gepumpten Festkörperlasern mit denen von Wellenleitern. Die Lichtführung im Kernbereich der Faser ermöglicht hohe Leistungsdichten über die gesamte Faserlänge und hohe Ausgangsleistungen bei gleichzeitig ausgezeichneter Strahlqualität. Hochleistungsfaserlaser können Wellenlängen von einigen Mikrometern emittieren, was einen deutlich kleineren maximalen Ablenkwinkel ergibt.

Die erfindungsgemäße Laseranordnung eignet sich insbesondere hervorragend für das Durchstrahlschweißen von Werkstücken aus Kunststoff. Sie ermöglicht den Einsatz des Phasenmodulationsarrays als variables diffraktives optisches Element für die Kleinserien- oder Musterfertigung. Sie ist damit besonders vorteilhaft und praktisch bei häufigen Umrüstvorgängen, da sie die auftretenden Rüstzeiten deutlich reduziert.

Vorteilhafterweise kann das Maskierungssystem den Laserstrahl ortsfest als feststehendes Muster oder ortsveränderlich als bewegtes Muster auf die Werkstücke abbilden. Somit eignet sich die erfindungsgemäße Laseranordnung gleichermaßen für die simultane wie auch für die quasisimultane Bearbeitung oder Verbindung von Werkstücken. Damit kann neben dem Standardeinsatz beim Simultanschweißen das variabel ansteuerbare Phasenmodulationsarray auch als Scanner eingesetzt werden. Dazu wird eine sägezahnartige räumliche Modulation erzeugt, die eine Ablenkung des gesamten auftreffenden Laserstrahls bewirkt. In diesem Modus kann die Laseranordnung auch zum Konturschweißen eingesetzt werden.

Sinn der Phasenmodulation ist es, die Phase des Laserlichtes so zu modulieren, dass ein gewünschtes Interferenzmuster entsteht. Ausgehend von einem polarisierten Strahlungsfeld mit ausreichender transversaler Kohärenz werden die Phasenlagen einzelner Teilbereiche des auftreffenden Laserstrahls kontrolliert verändert, so dass die Teilbereiche nach dem Phasenmodulationsarray in der gewünschten Weise interferieren. Durch die Flüssigkristallzellen wird der auftreffende Laserstrahl in einzelne Teilstrahlenbündel zerteilt. Jedes der Teilstrahlenbündel wird dabei in den individuell ansteuerbaren Zellen in einer bestimmten Weise phasenmoduliert. Nach dem Austreten aus dem Phasenmodulationsarray bilden die einzelnen Teilstrahlen in ihrer Gesamtheit einen neuen Laserstrahl. Die Modulation eines von der jeweiligen Flüssigkristallzelle bestimmten Teilstrahlenbündels erfolgt damit besonders einfach und flexibel und insbesondere unabhängig von den anderen Teilstrahlenbündeln.

Die Ortsauflösung und damit auch die Schärfe des auf den Werkstücken abgebildeten Musters bestimmt sich maßgeblich aus der Strahlqualität des ursprünglichen Strahlungsfeldes sowie der Geometrie und der Anzahl der einzelnen Flüssigkristallzellen. Im Praktischen kann durch eine elektrische Spannung, die von einem geeigneten elektronischen Steuergerät ausgeht, und an die Flüssigkristallzelle angelegt wird, der Brechungsindex der Flüssigkristalle verändert werden. Dadurch kann wiederum auf die Phasenlage des einfallenden Laserlichtes Einfluss genommen werden. Der Brechungsindex und damit die optische Phasenverzögerung lässt sich dabei mit wachsender Spannung kontinuierlich verändern. Durch gezieltes Anlegen individueller Spannungen an bestimmte ausgewählte Flüssigkristallzellen des Phasenmodulationsarray erhält man somit eine Vielzahl individueller Phasenlagen. Durch die gezielte Modulation der Phasen der einzelnen Teilstrahlenbündel erreicht man, dass diese auf den Werkstücken zu dem gewünschten Muster interferieren.

Prinzipiell kann an der Stelle eines Phasenmodulationsarrays basierend auf Flüssigkristallen auch ein mikroelektromechanisches System mit senkrecht bewegbaren Spiegeln (MEMS) eingesetzt werden.

Nachfolgend wird die Erfindung anhand eines Ausführungsbeispiels näher erläutert. Dabei handelt es sich um eine Laseranordnung mit einem variablen Phasenmodulationsarray zum Laserdurchstrahlschweißen von Werkstücken. Es zeigen in einer schematischen Darstellung:
- Figur 1: eine erfindungsgemäße Laseranordnung für die Betriebsart Simultanschweißen; und
- Figur 2: eine Strahlablenkung aus der Laseranordnung aus Figur 1 in der Betriebsart Quasisimulationsschweißen oder Konturschweißen.

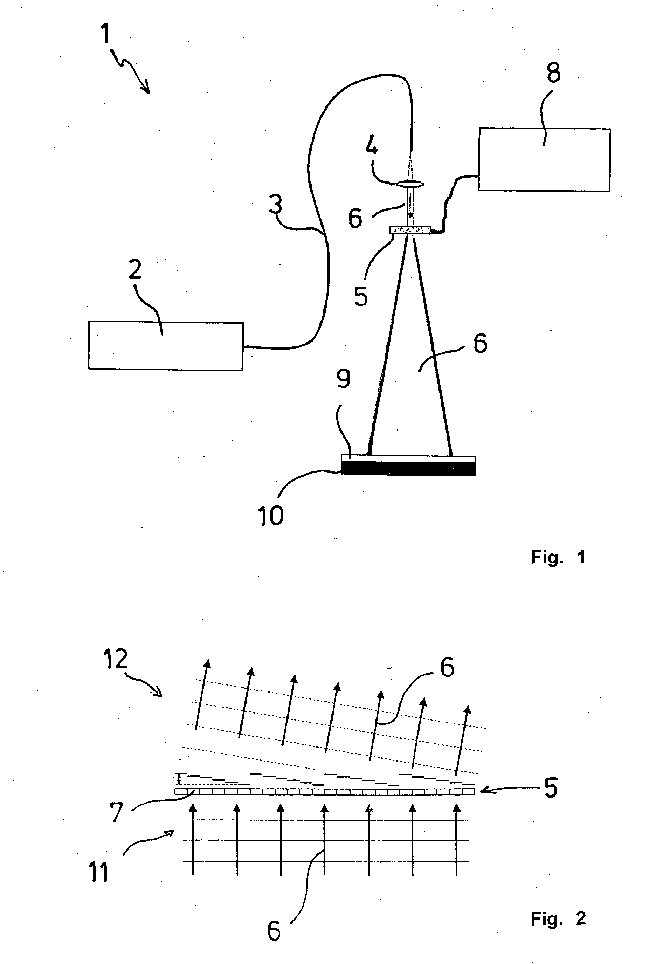

Figur 1 zeigt die erfindungsgemäße Laseranordnung 1, umfassend einen Faserlaser 2, einen Faserlichtleiter 3 zu einem in der Zeichnung nicht dargestellten Bearbeitungskopf, in dem eine optische Linse 4 zur Strahlformung und ein Phasenmodulationsarray 5 zur Phasenveränderung der Strahlung eines Laserstrahls 6 angeordnet sind. Der aus dem Lichtleiter 3 austretende Laserstrahl 6 wird von der Linse 4 gebündelt auf die in der Figur 2 sichtbar dargestellten Flüssigkristallzellen 7 des Phasenmodulationsarrays 5 projiziert.

Die Flüssigkristallzellen 7 des Phasenmodulationsarray 5 sind einzeln mittels einer elektronischen Ansteuerung 8 unabhängig voneinander ansteuerbar und modulieren die Phasen des auftreffenden Laserstrahls 6 an bestimmten Stellen in vorbestimmter gewünschter Weise gleich und/oder unterschiedlich. Das Phasenmodulationsarray 5 wird in dem dargestellten Beispiel in Transmission betrieben, so dass der Laserstrahl 6 also die Flüssigkristallzellen 7 passiert, wobei ein bestimmtes Strahlmuster erzeugt wird, das simultan auf die zu verbindenden Werkstücke 9, 10 gelenkt wird.

Figur 2 zeigt die Ablenkung des Laserstrahls 6 ohne Ausbildung eines speziellen Musters. Dabei werden nebeneinander angeordnete Flüssigkristallzellen 7 derart von der Ansteuerung 8 angesteuert, dass der Laserstrahl 6 eine sägezahnartige räumliche Phasenmodulation erfährt, die zu einer kontinuierlichen Strahlablenkung des Strahls 6 führt. Die Lichtwellen des Laserstrahls 6 breiten sich vor der Eintrittsseite 11 und nach der Austrittsseite 12 des Phasenmodulationsarrays 5, bedingt durch die veränderte Phasenlage, in unterschiedlichen Richtungen aus.

## Patentansprüche

1. Laseranordnung (1) zum Bearbeiten oder Verbinden von Werkstücken (9, 10) mittels elektromagnetischer Strahlung mit einer Laserquelle (2), die einen Laserstrahl (6) abgibt und einem elektronischem Maskierungssystem (5) für die Werkstücke (9, 10), das der Laserquelle (2) nachgeschaltet ist, wobei das Maskierungssystem (5) den passierenden Laserstrahl (6) in einem frei bestimmbaren Muster auf den Werkstücken (9, 10) abbildet, **gekennzeichnet durch** ein Phasenmodulationsarray (5) als Maskierungssystem, mit einer üblichen Pixelgröße größer vier Mikrometern und eine Laserquelle (2) mit einer hohen Strahlqualität des Laserstrahls (6), die die Abbildung von Mustern mit einer Linienbreite von kleiner zwei Millimetern scharf auf den Werkstücken (9, 10) ermöglicht.

2. Laseranordnung nach Anspruch 1, **dadurch gekennzeichnet, dass** die Strahlqualität K der Laserstrahlung einen Wert größer 0,25 und die Beugungsmaßzahl M² einen Wert kleiner 2 aufweist.

3. Laseranordnung nach Anspruch 1, **dadurch gekennzeichnet, dass** die Laserquelle ein Faserlaser ist.

4. Laseranordnung nach einem der vorangegangenen Ansprüche, **dadurch gekennzeichnet, dass** das Maskierungssystem (5) den Laserstrahl (6) ortsfest als feststehendes Muster auf den Werkstücken (9, 10) abbildet.

5. Laseranordnung nach einem der vorangegangenen Ansprüche 1 bis 3, **dadurch gekennzeichnet, dass** das Maskierungssystem (5) den Laserstrahl (6) als bewegtes Muster auf den Werkstücken (9, 10) abbildet.
